(19) Europäisches Patentamt

European Patent Office

Office européen des brevets

(11) Veröffentlichungsnummer: **0 675 309 A1**

# (12) EUROPÄISCHE PATENTANMELDUNG

(21) Anmeldenummer: **95104405.6**

(51) Int. Cl.6: **F16L 11/11**

(22) Anmeldetag: **24.03.95**

(30) Priorität: **30.03.94 DE 4411123**

(43) Veröffentlichungstag der Anmeldung:
**04.10.95 Patentblatt 95/40**

(84) Benannte Vertragsstaaten:
**AT CH DE DK FR LI**

(71) Anmelder: **ALCAN DEUTSCHLAND GMBH**
**Hannoversche Strasse 1**
**D-37075 Göttingen (DE)**

(72) Erfinder: **Heringhaus, Gerhard, Dipl.-Ing.**
**Normannenweg 6**
**D-58509 Lüdenscheid (DE)**

(74) Vertreter: **Füchsle, Klaus, Dipl.-Ing. et al**
**Hoffmann, Eitle & Partner,**
**Patentanwälte,**
**Arabellastrasse 4**
**D-81925 München (DE)**

(54) **Entlüftungsschlauch.**

(57) Einstückiger Entlüftungsschlauch (1), insbesondere Dachentlüftungsschlauch zur Verbindung einer Dachentlüftungspfanne mit einer Abwasserentlüftungsleitung, mit einem Aufsteckstutzen (2) an seinem einen, mit der Entlüftungspfanne verbindbaren Ende, einem Einsteckstutzen (11) an seinem anderen, mit der Entlüftungsleitung verbindbaren Ende und einem faltenbalgförmigen Schlauchteil (3) zwischen dem Aufsteckstutzen (2) und dem Einsteckstutzen, wobei der Entlüftungsschlauch (1) abschnittsweise aus zwei unterschiedlich elastischen Kunststoffmaterialien gefertigt ist, und zwar vorzugsweise derart, daß der Aufsteckstutzen (2) zumindest teilweise aus einem weichen, gummielastischen Material und zumindest der Einsteckstutzen (11) aus einem steiferen, weniger elastischen Material gefertigt ist. Der faltenbalgförmige Schlauchteil (3) kann sowohl aus dem einen als auch aus dem anderen Material gefertigt werden.

Fig. 1

Die Erfindung betrifft einen einstückigen Entlüftungsschlauch gemäß dem Oberbegriff des Patentanspruchs 1.

Derartige einstückige Entlüftungsschläuche werden insbesondere als Dachentlüftungsschläuche zur Verbindung einer Dachentlüftungspfanne mit einer Abwasserentlüftungsleitung eingesetzt. Ein Aufsteckstutzen eines solchen Dachentlüftungsschlauchs wird auf ein entsprechendes Anschlußrohr der Dachentlüftungspfanne aufgeschoben. Die Ausbildung des mit der Dachentlüftungspfanne zu verbindenden Schlauchendes erfolgt deswegen als Aufsteckstutzen, damit durch die Dachentlüftungspfanne eintretendes Wasser aufgefangen wird. Das andere, als Einsteckstutzen ausgebildete Ende des Dachentlüftungsschlauchs wird in ein entsprechend ausgebildetes Anschlußrohr der Abwasserentlüftungsleitung eingesteckt. Um einen axialen Versatz zwischen den jeweiligen Anschlußrohren der Dachentlüftungspfanne und der Abwasserentlüftungsleitung ausgleichen zu können und gleichzeitig eine ausreichende Stabilität des Schlauchs zu gewährleisten, ist der Schlauch zwischen dem Aufsteck- und dem Einsteckstutzen faltenbalgartig ausgebildet.

Der der Abwasserentlüftungsleitung zugekehrte Einsteckstutzen besteht üblicherweise aus mehreren abgestuften Anschlußstutzenabschnitten, die je nach Bedarf vom Stutzen abgetrennt werden können. Jeder Stutzenabschnitt ist gegebenenfalls mit einer Nut zur Aufnahme eines Dichtungsrings versehen, der jedoch nicht immer notwendig ist.

Bei dem Aufsteckstutzen, der den im Leitungsverlauf oberen Stutzen des Dachentlüftungsschlauchs darstellt, besteht jedoch die Gefahr, daß der Dachentlüftungsschlauch vom Anschlußrohr der Dachentlüftungspfanne aufgrund von Wärmedehnungen, Vibrationen, z.B. durch Windeinwirkung, oder wegen zu starken axialen Versatzes abrutscht.

Um ein solches Abrutschen des Aufsteckstutzens des Entlüftungsschlauchs zu verhindern, sind im Stand der Technik bereits verschiedene Lösungen vorgeschlagen worden.

Aus der DE 29 29 978 C3 ist es bekannt, zur Abdichtung der Steckverbindung zwischen dem Aufsteckstutzen und dem Anschlußrohr der Entlüftungpfanne in den Aufsteckstutzen eine Nut einzuformen, die zur Aufnahme eines aus gummielastischem Material bestehenden Dichtrings dient und deren Begrenzung am Aufsteckstutzen nach außen hervorsteht. Dieser Dichtring hat außer der Dichtfunktion auch eine gewisse Klemmwirkung aufzubringen, um ein Abrutschen des Schlauchs zu verhindern.

Nachteilig an dieser Verbindung zwischen Aufsteckstutzen und Anschlußrohr der Entlüftungspfanne ist, daß man von außen nicht feststellen kann, ob der Gummidichtring beim Aufschieben des Aufsteckstutzens aus seiner Nut herausgehebelt worden ist, was eine ungenügende Abdichtung zur Folge hätte und schlimmstenfalls sogar ein Lösen der Steckverbindung.

In der EP 0 339 234 B1 wird vorgeschlagen, am Aufsteckstutzen eine ins Rohrinnere gerichtete Haltewulst auszubilden. Dabei soll die vorhandene Flexibilität des Entlüftungsschlauchs zur Ausbildung einer elastischen Dichtungspartie, nämlich der abdichtenden Haltewulst, genutzt werden. Durch die Rückstellkraft des die Haltewulst bildenden Materialabschnitts soll die gewünschte Festlegung der Steckverbindung erreicht werden.

Die Ausbildung einer solchen elastischen Dichtungspartie in Form einer Haltewulst ermöglicht aber nur eine unbefriedigende Dicht- und Haltefunktion, da bei einer zu elastischen Ausbildung des Entlüftungsschlauchs insgesamt auch der Einsteckstutzen zu weich werden würde, so daß ein Zusammendrücken des Schlauchs von außen z.B. beim Einschieben von Hand in die Abwasserentlüftungsleitung oder ein Zusammenziehen durch Unterdruck von innen nicht verhindert werden könnte, wodurch der Schlauch seine Funktion als Entlüftungsleitung einbüßen würde.

In der EP 0 339 234 B1 ist für den Fall, daß die Haltefunktion des nicht genügend Elastizität aufweisenden Aufsteckstutzens nicht ausreicht, ein zusätzlicher Klemmring zur besseren Fixierung des Stutzens auf dem Anschlußrohr der Entlüftungspfanne vorgesehen. Ein solcher Klemmring erhöht zwar die Haltefunktion, verbessert aber bei einem solchen relativ steifen Aufsteckstutzen kaum die Dichtfunktion. Außerdem ist die Anbringung des zusätzlichen Klemmrings wegen der meist sehr beengten Platzverhälnisse nur sehr schwer möglich.

Der Erfindung liegt die Aufgabe zugrunde, einen einstückigen Entlüftungsschlauch zu schaffen, bei dem eine dichte und feste Verbindung des Entlüftungsschlauchs mit einem Anschlußrohr einer Entlüftungspfanne ohne zusätzliche Hilfsmittel wie z.B. Klemm- und Dichtringe ermöglicht wird und bei dem der mit dem Abwasserentlüftungsrohr in Verbindung stehende Stutzen eine ausreichende Festigkeit gegen ein Zusammendrücken aufweist.

Diese Aufgabe wird erfindungsgemäß von einem Entlüftungsschlauch mit den Merkmalen des Patentanspruchs 1 gelöst.

Durch die Fertigung des erfindungsgemäßen Entlüftungsschlauchs aus zwei Kunststoffmaterialien unterschiedlicher Elastizität lassen sich beim erfindungsgemäßen Entlüftungsschlauch die einzelnen Schlauchabschnitte in ihrem Werkstoff ideal an die jeweiligen Anforderungen anpassen. Dabei wird durch eine Fertigung zumindest desjenigen Teils des Aufsteckstutzens, an dem eine Dicht- und Haltepartie ausgebildet ist, aus einem weichen, gummielastischen Material sichergestellt, daß das Material in diesem Bereich eine ausreichende Elastizität aufweist, um eine sichere Dicht- und Haltefunktion des Aufsteckstutzens zu erreichen. Andererseits bleibt durch eine Fertigung zumindest des Einsteckstutzens aus einem steiferen, weniger elastischen Material gewährleistet, daß dieser Schlauchabschnitt eine gute Stabilität gegen ein Zusammendrücken von außen oder ein Zusammenziehen durch Unterdruck von innen aufweist.

Der faltenbalgförmige Schlauchteil des Entlüftungsschlauchs, der mit einem Anschlußrohr einer Entlüftungsleitung verbunden wird, kann dabei sowohl ganz aus dem steiferen, weniger elastischen Material oder aber abschnittsweise aus beiden Materialien gefertigt sein.

Zweckmäßigerweise erfolgt die Fertigung des einstückigen Entlüftungsschlauchs aus zwei unterschiedlich elastischen Kunststoffmaterialien durch Blasformen. Beispielsweise in der DE-AS 12 61 657 und der DE 37 18 605 C2 ist beschrieben, wie schlauchförmige Stränge durch Blasformen einstückig aus Abschnitten oder Segmenten, die jeweils aus unterschiedlichen Kunststoffen gebildet sind, hergestellt werden können.

Vorzugsweise ist ein Teilabschnitt des Aufsteckstutzens als Dichtungs- und Haltepartie mit zumindest einer umlaufenden Verengung des lichten Durchmessers ausgebildet.

Eine günstige Ausführungsform einer solchen Durchmesserverengung besteht darin, eine im Schlauchinneren in axialer Richtung konvex gekrümmte Einwölbung entlang eines bestimmten axialen Abschnitts des Aufsteckstutzens vorzusehen.

Es ist auch vorteilhaft, die Durchmesserverengung als welligen Abschnitt auszubilden, der durch mit welligen Übergängen aneinandergrenzende Ringsicken gebildet wird. Dabei weist diejenige Ringsicke, die in axialer Richtung in der Mitte des welligen Abschnitts angeordnet ist, den kleinsten Innendurchmesser auf, während weiter von der Mitte des welligen Abschnitts entfernte Ringsicken jeweils größere Innendurchmesser aufweisen als eine jeweils benachbarte, näher an der Mitte des welligen Abschnitts liegende Ringsicke. Sämtliche Ringsicken weisen jedoch einen kleineren Innendurchmesser auf als der unmittelbar an den welligen Abschnitt angrenzende Bereich des Aufsteckstutzens.

Eine weitere bevorzugte Ausführungsform besteht darin, die Durchmesserverengung als Teil einer faltenbalgförmigen Dichtungs- und Haltepartie auszubilden. Vorzugsweise besteht diese faltenbalgförmige Dichtungs- und Haltepartie im Längsschnitt aus drei zueinander im Winkel angeordneten Flanken. Eine vorteilhafte Ausbildung besteht darin, die drei Flanken im Längsschnitt Z-förmig anzuordnen.

Es ist günstig, die mittlere der drei Flanken im Längsschnitt in einer größeren Länge auszubilden als die am weitesten vom freien Ende des Aufsteckstutzens entfernt liegende Flanke. Dadurch wird, wie nachfolgend noch näher erläutert wird, ein Einschnappen der Dichtungs- und Haltepartie beim Aufschieben des Aufsteckstutzens auf ein Anschlußrohr einer Entlüftungspfanne erreicht. Besonders günstig ist es dabei, wenn der im Längsschnitt von der Querschnittsebene des Schlauchs und der am weitesten vom freien Ende des Aufsteckstutzens entfernt liegenden Flanke eingeschlossene Winkel $\alpha \geq 0°$ ist. Insbesondere ist es günstig, wenn der Winkel im Bereich von $100 \leq \alpha \leq 30°$ liegt.

Beim Aufstecken eines vorangehend beschriebenen Aufsteckstutzens mit einer faltenbalgförmigen Dichtungs- und Haltepartie über ein Anschlußrohr einer Entlüftungspfanne wird zunächst die dem freien Ende des Aufsteckstutzens nächstgelegene Flanke erfaßt, die die Durchmesserverengung bestimmt, und diese Flanke wird dabei entgegen der Aufsteckrichtung bewegt, wodurch sich theoretisch der lichte Durchmesser an dieser Stelle verringert. Diese theoretische Durchmesserverringerung wird jedoch über die gummielastische Dehnung der Dichtungs- und Haltepartie aufgenommen. Beim weiteren Aufschieben des Aufsteckstutzens schwenkt dann die mittlere Flanke entgegen der Aufschieberichtung auf die am weitesten vom freien Ende des Aufsteckstutzens entfernte Flanke zu und schnappt dann in eine Raststellung ein. Die mittlere Flanke schwenkt dabei um denjenigen Winkel, der im unbelasteten Zustand der Dichtungs- und Haltepartie im Längsschnitt von der mittleren Flanke und der am weitesten vom freien Ende des Aufsteckstutzens entfernten Flanke eingeschlossen wird. Nach dem Einschnappen in die Raststellung wirkt in diesem Bereich der Dichtungs- und Haltepartie eine etwas geringere elastische Rückstellkraft als während des Umschwenkens der Flanke, so daß durch dieses Einrasten ein absolut sicherer und dichter Sitz erreicht wird.

Natürlich sind sämtliche vorangehend erläuterten Ausbildungen von Dichtungs- und Haltepartien mit Durchmesserverengungen im Aufsteckstutzen in demjenigen Abschnitt des Aufsteckstutzens vorgesehen, der aus dem weichen, gummielastischen Material gebildet ist, um die Elastizität des Materials für ein dichtendes Anschmiegen und zur Ausbildung elastischer Rückstellkräfte als Haltekräfte zu nutzen.

Um ein leichteres Aufschieben des Aufsteckstutzens auf das Anschlußrohr zu ermöglichen, ist es zweckmäßig, am freien Ende des Aufsteckstutzens einen zylindrischen Einlaufbereich mit erweitertem Innendurchmesser oder einen sich konisch zum freien Ende des Aufsteckstutzens hin erweiternden Bereich vorzusehen.

Die erfindungsgemäße Lösung hat also den Vorteil, daß der eigentliche flexibel verlegbare Entlüftungsschlauch, der seine Flexibilität in erster Linie durch seine faltenbalgförmige Gestaltung erhält, steif und fest genug bleibt, um nicht an seinem Einsteckstutzen zusammengedrückt zu werden, während der den Aufsteckstutzen bildende Abschnitt sich durch sein weiches, gummielastisches Material dem Anschlußrohr gut dichtend anpaßt und den Aufsteckstutzen durch seine elastische Rückstellkraft auf dem Anschlußrohr sicher festhält. Eine zusätzliche Klemm oder Haltevorrichtung ist selbst bei schwierigen Bedingungen nicht notwendig und bringt keinen über die erfinderische Lösung hinausgehenden Vorteil.

Nachfolgend wird der erfindungsgemäße Entlüftungsschlauch anhand von Ausführungsbeispielen mit Bezug auf die beigefügten Zeichnungen näher erläutert.

Es zeigen:

Fig. 1 ein erstes Ausführungsbeispiel des erfindungsgemäßen Entlüftungsschlauchs in einer Teildarstellung im Längsschnitt;

Fig. 2 ein zweites Ausführungsbeispiel des erfindungsgemäßen Entlüftungsschlauchs in einer Teildarstellung im Längsschnitt;

Fig. 3 ein drittes Ausführungsbeispiel des erfindungsgemäßen Entlüftungsschlauchs in einer Teildarstellung im Längsschnitt;

Fig. 4 ein viertes Ausführungsbeispiel des erfindungsgemäßen Entlüftungsschlauchs in einer Teildarstellung im Längsschnitt;

Fig. 5 ein fünftes Ausführungsbeispiel des erfindungsgemäßen Entlüftungsschlauchs in einer Teildarstellung im Längsschnitt;

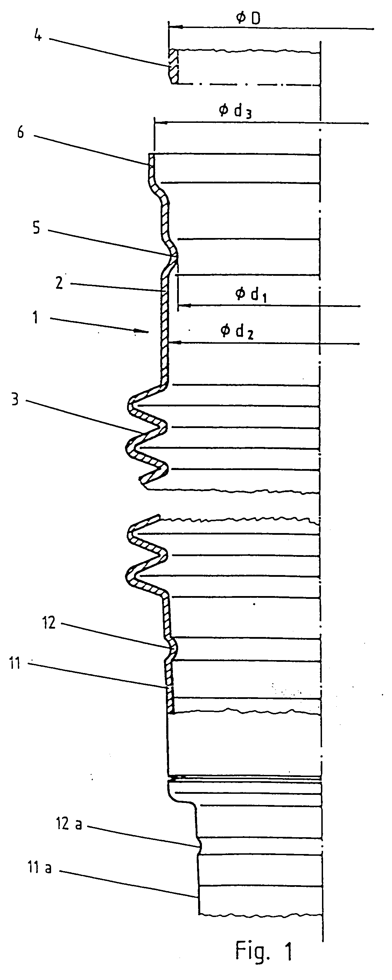

Die Figuren 1 bis 5 zeigen fünf Ausführungsbeispiele erfindungsgemäßer Entlüftungsschläuche. Es ist jeweils ein Entlüftungsschlauch 1 mit einem Aufsteckstutzen 2 und einem sich daran einstückig anschließenden faltenbalgförmigen Schlauchteil 3 gezeigt. An das zweite Ende des faltenbalgförmigen Schlauchteils 3, der nur teilweise dargestellt ist, schließt sich jeweils einstückig ein Einsteckstutzen 11 zur Verbindung des Entlüftungsschlauchs 1 mit einer Entlüftungsleitung (nicht dargestellt) an. Die Entlüftungsschläuche 1 gemäß den Figuren 1 bis 5 sind jeweils rotationssymmetrisch zur Längsachse des Schlauchs.

Der gesamte Aufsteckstutzen 2 ist jeweils aus einem weichen, gummielastischen Material gefertigt. Der Einsteckstutzen 11, der in ein entsprechendes Anschlußrohr einer Entlüftungsleitung eingesetzt wird, ist aus einem steiferen, weniger elastischen Material gebildet. Der faltenbalgförmige Schlauchteil 3 ist, je nach Gestaltung von Faltenform und -größe, aus dem weichen, gummielastischen Material des Aufsteckstutzens 2 oder aus dem steiferen, weniger elastischen Material des Einsteckstutzens 11. Dabei wird der gesamte Entlüftungsschlauch 1 einstückig durch Blasformen hergestellt.

Der Aufsteckstutzen 2 wird auf ein Anschlußrohr 4 einer Entlüftungspfanne aufgesteckt, um eine dichte Steckverbindung herzustellen, durch die der Entlüftungsschlauch 1 auf dem Anschlußrohr 4 gehalten wird. Der Einsteckstutzen 11, 11a wird in ein nicht dargestelltes Anschlußrohr der Abwasserentlüftungsleitung eingesteckt. In die Nut 12, 12a kann gegebenenfalls ein Dichtring eingelegt werden.

Nachdem der vorangehend beschriebene Grundaufbau bei allen fünf Ausführungsbeispielen übereinstimmt, werden nachfolgend lediglich die unterschiedlichen Ausgestaltungen des Aufsteckstutzens 2 für jedes Ausführungsbeispiel erläutert.

Der Aufsteckstutzen 2 des in Fig. 1 gezeigten Entlüftungsschlauchs 1 weist einen zylindrischen Hauptabschnitt mit einem Innendurchmesser $d_2$ auf, der sich unmittelbar an den faltenbalgförmigen Schlauchteil 3 anschließt. Der Innendurchmesser $d_2$ dieses Hauptabschnitts entspricht in etwa dem Außendurchmesser D des Anschlußrohrs 4 der Entlüftungspfanne. Im Bereich des freien Endes des Aufsteckstutzens 2 ist dann ein zylindrischer Abschnitt 6 mit erweitertem Innendurchmesser $d_3$ vorgesehen. Der Hauptabschnitt des Aufsteckstutzens 2 weist eine nach innen gewölbte ringförmige Sikke 5 mit einem Innendurchmesser $d_1$ auf. Der Innendurchmesser $d_1$ ist also kleiner als der Innendurchmesser $d_2$ des Aufsteckstutzens 2 bzw. der Außendurchmesser D des Anschlußrohrs 4 und der Innendurchmesser $d_3$ ist größer als die Durchmesser $d_2$ und D.

Der erweiterte Abschnitt 6 ermöglicht ein leichtes Aufschieben des Aufsteckstutzens 2 auf das Anschlußrohr 4 und die ringförmige Sicke 5 gewährleistet dann beim aufgesteckten Aufsteckstutzen ein dichtendes Anliegen am Anschlußrohr 4 sowie eine gute Haltefunktion des Aufsteckstutzens aufgrund der elastischen Rückstellkräfte im Bereich der ringförmigen Sicke. Durch die Wahl eines weichen, gummielastischen Materials für den Aufsteckstutzen 2 kann sich der Aufsteckstutzen besonders gut an das Anschlußrohr 4 anschmiegen. Dabei kann auch der Innendurchmesser $d_2$ des Hauptabschnitts etwas kleiner als der Außendurchmesser D des Anschlußrohrs 4 gewählt werden, um so sowohl die Dicht- als auch die Haltefunktion durch ein elastisches Anschmiegen des Hauptabschnitts zu verbessern.

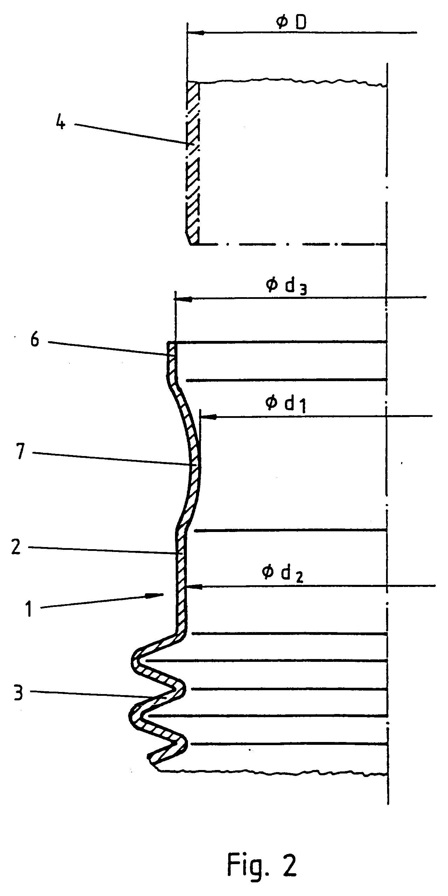

Der in Fig. 2 gezeigte Aufsteckstutzen 2 weist einen sich einstückig an den faltenbalgförmigen Schlauchteil 3 anschließenden, zylindrischen Hauptabschnitt mit einem Innendurchmesser $d_2$ auf. Dieser Innendurchmesser $d_2$ entspricht in etwa dem Außendurchmesser D des Anschlußrohrs 4. Daran schließt sich eine Einwölbung 7 an, die einen minimalen Innendurchmesser $d_1$ aufweist. Der gekrümmte Wölbungsbereich 7 endet mit einem Innendurchmesser $d_3$. Daran schließt sich bis zum freien Ende des Aufsteckstutzens 2 ein zylindrischer Bereich 6 mit Innendurchmesser $d_3$ an. Der Innendurchmesser $d_1$ ist kleiner als die Durchmesser $d_2$ und D, während der Innendurchmesser $d_3$ größer als die Durchmesser $d_2$ und D ist.

Somit bildet der Bereich 6 wie beim vorigen Ausführungsbeispiel einen Einführungsbereich, der durch seinen vergrößerten Innendurchmesser das Aufstecken des Aufsteckstutzens auf das Anschlußrohr erleichtert. Im Gegensatz zum zuvor beschriebenen Ausführungsbeispiel verbindet der eingewölbte Bereich 7 unmittelbar den zylindrischen Hauptabschnitt mit Durchmesser $d_2$ mit dem erweiterten Abschnitt mit Durchmesser $d_3$. Bei diesem Ausführungsbeispiel ist der eingewölbte Bereich 7 auch auf einem längeren axialen Abschnitt mit entsprechend geringerer Krümmung als die ringförmige Sicke 5 gemäß Fig. 1 gestaltet. Der eingewölbte Bereich 7 gewährleistet ein gutes Anschmiegen des Aufsteckstutzens 2 an das Anschlußrohr 4 mit einer entsprechenden Dicht- und Haltewirkung. Auch bei diesem Ausführungsbeispiel kann der Innendurchmesser $d_2$ des Hauptabschnitt etwas kleiner gewählt werden als der Außendurchmesser D des Anschlußrohrs.

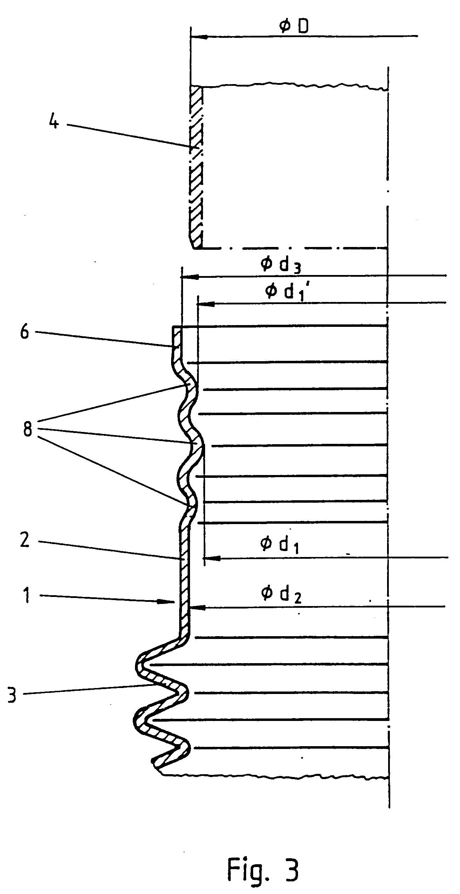

Im Ausführungsbeispiel gemäß Fig. 3 ist ebenfalls ein zylindrischer Hauptabschnitt mit Innendurchmesser $d_2$ und ein zylindrischer, erweiterter Einführungsabschnitt 6 mit Innendurchmesser $d_3$ entsprechend dem in Fig. 2 gezeigten Ausführungsbeispiel ausgebildet. Auch die Beziehung der Durchmesser $d_2$ und $d_3$ zueinander und im Verhältnis zum Außendurchmesser D des Anschlußrohrs 4 entspricht dem zweiten Ausführungsbeispiel.

Zwischen den beiden zylindrischen Bereichen mit den Durchmessern $d_2$ und $d_3$ ist ein wellenförmig gestalteter Bereich vorgesehen. Dabei sind drei umlaufende, nach innen gewölbte ringförmige Sicken aneinandergeformt und zwar derart, daß die mittlere Sicke einen Innendurchmesser $d_1$ und die beiden äußeren Sicken Innendurchmesser $d_{1'}$ aufweisen. Dabei ist der Innendurchmesser der mittleren Sicke 8 kleiner als die Innendurchmesser der beiden außenliegenden Sicken 8. Beide Durchmesser $d_1$ und $d_{1'}$ sind wiederum kleiner als der Innendurchmesser $d_2$ des zylindrischen Hauptabschnitts

des Aufsteckstutzens 2. Der wellenförmige Bereich mit den Sicken 8 ist der Bereich des Aufsteckstutzens, der sich hauptsächlich an das Anschlußrohr 4 anschmiegt und eine entsprechende Dicht- und Haltefunktion ausübt.

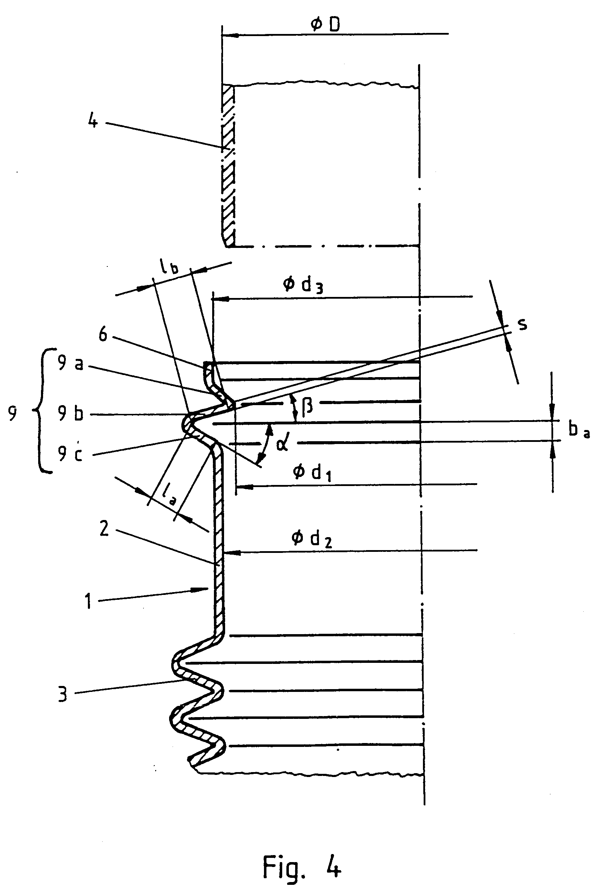

Auch das Ausführungsbeispiel gemäß Fig. 4 weist einen zylindrischen Haupt- oder Führungsabschnitt sowie einen zylindrischen Fang- oder Einführungsabschnitt 6 analog zu den in den Figuren 2 und 3 gezeigten Ausführungsbeispielen mit entsprechenden Durchmessergegebenheiten auf. Zwischen den beiden zylindrischen Abschnitten ist ein im Längsschnitt Z-förmiger Abschnitt 9 mit drei Flanken 9a, 9b, 9c ausgebildet. Vom Abschnitt 6 mit Innendurchmesser $d_3$ aus ist zunächst eine geradflächige Flanke 9a unter einem Winkel bis zu einem minimalen Innendurchmesser $d_1$ des Aufsteckstutzens nach innen geformt, an die sich eine geradflächige Flanke 9b anschließt, die in etwa quer zur Längsachse des Schlauchs über den Durchmesser $d_3$ hinaus nach außen verläuft und an die sich wiederum eine geradflächige Flanke 9c anschließt, die sich mit einer ähnlichen Neigung wie die Flanke 9a nach innen bis zum Durchmesser $d_2$ des Hauptabschnitts erstreckt, in den sie einmündet. Der Z-förmige Bereich 9a, 9b, 9c gewährleistet eine gute Dicht- und Haltefunktion des Aufsteckstutzens 2. Durch eine besondere Wahl der Flankenlängen und -winkel und ihrer Verhältnisse zueinander wird eine Einschnappwirkung erzielt.

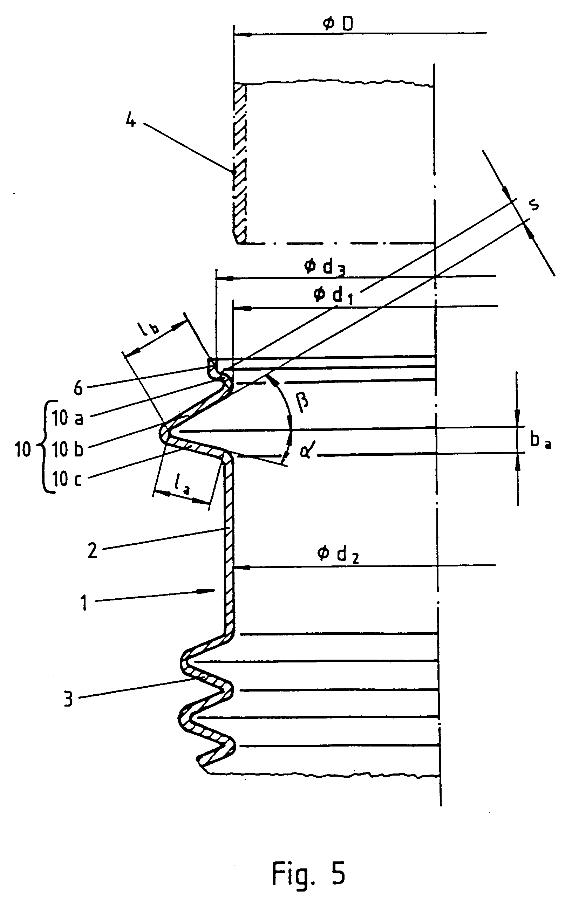

Das in Fig. 5 dargestellte Ausführungsbeispiel weist ebenfalls einen zylindrischen Haupt- oder Führungsabschnitt mit einem Innendurchmesser $d_2$ und einen erweiterten Fang- oder Einführungsabschnitt 6 mit einem Innendurchmesser $d_3$ auf, mit Durchmesserverhältnissen entsprechend den mit Bezug auf die Figuren 2 bis 4 beschriebenen Ausführungsbeispielen. Im Anschluß an den erweiterten Fang- oder Einführungsbereich 6 ist eine nach innen bis auf einen minimalen Innendurchmesser $d_1$ eingezogene Flanke 10a ausgebildet, an die sich zwei weitere Flanken 10b und 10c anschließen, so daß sich insgesamt eine faltenbalgförmige Dichtungs- und Haltepartie 10 ergibt, deren Flanken 10a, 10b, 10c im Winkel zueinander angeordnet sind. Die mittlere Flanke 10b sowie die in der Zeichnung untere Flanke 10c erstrecken sich über den Durchmesser $d_3$ hinaus, wobei diese beiden Flanken geradflächig ausgebildet sind und im Längsschnitt die Flanke 10b eine Länge $l_b$ und die Flanke 10c eine Länge $l_a$ aufweist. Dabei ist die Länge $l_b$ größer als die Länge $l_a$, d.h. es gilt:

$$\frac{lb}{la} > 1$$

Dabei muß die auf die Mittellinie projizierte Breite $b_a$ der Flanke 9c, 10c größer als die Dicke s der Dichtlippe an der Flanke 9b, 10b sein.

Die mittlere Flanke 10b der faltenbalgförmigen Dichtungs- und Haltepartie 10 verläuft unter einem Winkel $\beta$ zur Querschnittsebene des Schlauchs, während die untere Flanke 10c unter einem Winkel $\alpha$ zur Querschnittsebene verläuft.

In analoger Weise weist auch bei dem in Fig. 4 gezeigten Ausführungsbeispiel die mittlere Flanke 9b eine größere Länge $l_b$ als die in der Zeichnung untere Flanke 9c auf, deren Länge $l_a$ beträgt. Hier gilt also ebenso $l_b/l_a > 1$. Auch beim vierten Ausführungsbeispiel gemäß Fig. 4 schließt die mittlere Flanke 9b einen Winkel $\beta$ mit der Querschnittsebene des Schlauchs ein, während die untere Flanke 9c einen Winkel $\alpha$ mit der Querschnittsebene einschließt.

Bei den beiden Ausführungsbeispielen gemäß den Figuren 4 und 5 ist der Winkel $\alpha$ jeweils größer 0°. Vorzugsweise liegt der Winkel $\alpha$ in einem Bereich von 10 bis 30°.

Nachfolgend wird nun für die beiden in den Figuren 4 und 5 dargestellten Ausführungsbeispiele die Einschnappwirkung erläutert, die insbesondere durch die oben angegebene Wahl des Längenverhältnisses $l_b/l_a$ erreicht wird, wobei eine Wahl des Winkels $\alpha$ im Bereich von 10 bis 30° besonders günstig ist.

Beim Aufschieben des Aufsteckstutzens 2 auf das Anschlußrohr 4 wird nach dem Passieren des Einführungs- und Fangbereichs 6 vom Anschlußrohr 4 die obere Flanke 9a, 10a der Dichtungs- und Haltepartie 9, 10 erfaßt, die einen Innendurchmesser $d_1$ aufweist, der kleiner als der Außendurchmesser D des Anschlußrohres 4 ist. Dadurch wird während des weiteren Aufschiebevorgangs die Flanke 9a, 10a entgegen der Aufschieberichtung bewegt, wodurch sich theoretisch der Innendurchmesser $d_1$ verringern würde. Diese theoretische Durchmesserverringerung wird in der Praxis von der elastischen Dehnung des weichen, gummielastischen Materials der Dichtungs und Haltepartie aufgenommen. Im weiteren Verlauf des Aufschiebens des Aufsteckstutzens 2 wird dann die mittlere Flanke 9b, 10b um den Winkelbereich $\alpha + \beta$ um ihre Außenkante entgegen der Aufschieberichtung zur unteren Flanke 9c, 10c hingeschwenkt. Dabei schnappt die mittlere Flanke 9b, 10b in eine Raststellung ein. Da die in der Raststellung vorliegende elastische Rückstellkraft etwas geringer ist als die während des Umschwenkens der mittleren Flanke 9b, 10b auftretende elastische Rückstellkraft, bleibt die umgeschwenkte Flanke in ihrer Rastposition und die Dichtungs- und Haltepartie 9, 10 gewährleistet dabei sowohl einen sicheren als auch dichten Sitz des Aufsteckstutzens 2 auf dem Anschlußrohr 4.

Bei allen vorangehend beschriebenen Ausführungsbeispielen kann der Einführungsbereich 6 anstatt als zylindrischer Abschnitt auch als konischer Abschnitt ausgeführt sein, der sich vom freien Ende zum Schlauch hin verjüngt.

**Patentansprüche**

1. Einstückiger Entlüftungsschlauch zur Verbindung einer Entlüftungspfanne mit einer Entlüftungsleitung, mit
   - einem Aufsteckstutzen (2) an seinem einen, mit der Entlüftungspfanne verbindbaren Ende,
   - einem Einsteckstutzen (11) an seinem anderen, mit der Entlüftungsleitung verbindbaren Ende und
   - einem faltenbalgförmigen Schlauchteil (3) zwischen dem Aufsteckstutzen (2) und dem Einsteckstutzen (11)

   dadurch **gekennzeichnet,** daß
   - zumindest derjenige Teil des Aufsteckstutzens (2), an dem eine Dicht- und Haltepartie ausgebildet ist, aus einem weichen, gummielastischen Material und
   - zumindest der Einsteckstutzen (11) aus einem steiferen, weniger elastischen Material gefertigt ist.

2. Entlüftungsschlauch nach Anspruch 1, dadurch **gekennzeichnet**, daß der faltenbalgförmige Schlauchteil (3) abschnittsweise aus dem weichen, gummielastischen Material und dem steiferen, weniger elastischen Material gefertigt ist.

3. Entlüftungsschlauch nach Anspruch 1, dadurch **gekennzeichnet**, daß der faltenbalgförmige Schlauchteil (3) ganz aus dem steiferen, weniger elastischen Material gefertigt ist.

4. Entlüftungsschlauch nach einem der vorhergehenden Ansprüche, dadurch **gekennzeichnet**, daß am Aufsteckstutzen (2) im Bereich des weichen, gummielastischen Materials zumindest eine umlaufende Verengung des lichten Durchmessers (5; 7; 8; 9a, 9b) ausgebildet ist.

5. Entlüftungsschlauch nach Anspruch 4, dadurch **gekennzeichnet**, daß die Durchmesserverengung in Form einer im Schlauchinneren konvex gekrümmten Einwölbung (5; 7) vorgesehen ist.

6. Entlüftungsschlauch nach Anspruch 4, dadurch **gekennzeichnet**, daß die Durchmesserverengung in Form mehrerer, einen welligen Abschnitt bildenden Ringsicken (8) ausgeführt ist, wobei jede in axialer Richtung des Schlauchs näher an der Mitte des welligen Abschnitts liegende Ringsicke (8) einen kleineren Innendurchmesser ($d_1$) aufweist als eine jeweils benachbarte, weiter von der Mitte des Abschnitts entfernte Ringsicke (8).

7.  Entlüftungsschlauch nach Anspruch 4, dadurch **gekennzeichnet**, daß die Durchmesserverengung (9a, 9b; 10a, 10b) Teil einer faltenbalgförmigen Dichtungs- und Haltepartie (9; 10) ist.

8.  Entlüftungsschlauch nach Anspruch 7, dadurch **gekennzeichnet**, daß die faltenbalgförmige Dichtungs- und Haltepartie (9; 10) im Längsschnitt aus drei zueinander im Winkel angeordneten Flanken (9a, 9b, 9c; 10a, 10b, 10c) besteht.

9.  Entlüftungsschlauch nach Anspruch 8, dadurch **gekennzeichnet**, daß die drei Flanken im Längsschnitt Z-förmig (9a, 9b, 9c) angeordnet sind.

10. Entlüftungsschlauch nach Anspruch 8 oder 9, dadurch **gekennzeichnet**, daß die beiden dem freien Ende des Aufsteckstutzens (2) näherliegenden Flanken (9a, 9b; 10a, 10b) die Durchmesserverengung in Form einer ins Schlauchinnere ragenden Wulst ausbilden.

11. Entlüftungsschlauch nach einem der Ansprüche 8 bis 10, dadurch **gekennzeichnet**, daß im Längsschnitt die mittlere Flanke (9b; 10b) eine größere Länge ($l_b$) aufweist als die Länge ($l_a$) der sich anschließenden, vom freien Ende des Aufsteckstutzens (2) weiter entfernt liegenden Flanke (9c; 10c), um beim Aufschieben des Aufsteckstutzens (2) auf ein Anschlußrohr (4) einer Entlüftungspfanne eine Einschnappwirkung zu erzielen.

12. Entlüftungsschlauch nach Anspruch 11, dadurch **gekennzeichnet**, daß der Winkel ($\alpha$), der im Längsschnitt von der Querschnittsebene des Schlauchs und der vom freien Ende des Aufsteckstutzens (2) am weitesten entfernt liegenden Flanke (9c; 10c) eingeschlossen wird, im Bereich von $10° \leq \alpha \leq 30°$ liegt.

13. Entlüftungsschlauch nach Anspruch 12, dadurch **gekennzeichnet**, daß die auf die Mittellinie projizierte Breite ($b_a$) der vom freien Ende des Aufsteckstutzens (2) am weitesten entfernt liegenden Flanke (9c; 10c) größer als die Wanddicke (s) der mittleren Flanke (9b; 10b) ist.

Fig. 1

$\phi\,D$

4

$\phi\,d_3$

6

$\phi\,d_1$

7

2

$\phi\,d_2$

1

3

Fig. 2

Fig. 3

Fig. 4

Fig. 5

<table>
<tr><td>Europäisches Patentamt</td><td>EUROPÄISCHER RECHERCHENBERICHT</td><td>Nummer der Anmeldung<br>EP 95 10 4405</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | EP-A-0 339 234 (KLOBER JOHANNES) 2.November 1989 * Abbildungen * --- | 1-5 | F16L11/11 |
| D,A | DE-B-12 61 657 (KAUTEX-WERK REINOLD HAGEN) * Anspruch 1; Abbildungen * --- | 1-3 | |
| A | US-A-4 424 834 (SUMI TAKEHIKO ET AL) 10.Januar 1984 * Zusammenfassung; Abbildungen * ----- | 1-3 | |

**RECHERCHIERTE SACHGEBIETE (Int.Cl.6)**

F16L

Der vorliegende Recherchenbericht wurde für alle Patentansprüche erstellt

| Recherchenort | Abschlußdatum der Recherche | Prüfer |
|---|---|---|
| DEN HAAG | 13.Juli 1995 | Budtz-Olsen, A |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes
    Dokument

EPO FORM 1503 03.82 (P04C03)